# EUROPÄISCHE PATENTSCHRIFT

(11) **EP 1 500 275 B1**
(45) Veröffentlichungstag und Bekanntmachung des Hinweises auf die Patenterteilung: **21.12.2005**
(21) Anmeldenummer: 04741519.5
(22) Anmeldetag: 06.05.2004
(51) Int. Cl.: H04N 7/18, H04N 5/335, G01S 17/02, B60R 21/01

(54) **VERFAHREN UND VORRICHTUNG ZUM ERFASSEN EINES OBJEKTES ODER EINER PERSON**
METHOD AND DEVICE FOR DETECTING AN OBJECT OR A PERSON
PROCEDE ET DISPOSITIF POUR DETECTER UN OBJET OU UNE PERSONNE

(30) Priorität: 08.05.2003 DE 10320714
(43) Veröffentlichungstag der Anmeldung: 26.01.2005
(73) Patentinhaber: SIEMENS AKTIENGESELLSCHAFT, 80333 München (DE)
(72) Erfinder: FRENZEL, Henryk, 93059 Regensburg (DE); VOLTZ, Stephan, 91230 Happurg (DE)
(86) Internationale Anmeldenummer: PCT/EP2004/050720
(87) Internationale Veröffentlichungsnummer: WO 2004/100551

(56) Entgegenhaltungen:
- WO-A-00/29262
- WO-A-02/41031
- WO-A-03/089277
- DE-A- 19 757 595
- US-A- 5 737 083
- US-A- 5 835 613
- US-B1- 6 470 801
- SANTOS CONDE J E ET AL: "A smart airbag solution based on a high speed CMOS camera system" IMAGE PROCESSING, 1999. ICIP 99. PROCEEDINGS. 1999 INTERNATIONAL CONFERENCE IN KOBE, JAPAN 24-28 OCT. 1999, PISCATAWAY, NJ, USA,IEEE, US, 24. Oktober 1999 (1999-10-24), Seiten 930-934, XP010368821 ISBN: 0-7803-5467-2

## Beschreibung

Die vorliegende Erfindung betrifft ein Verfahren und eine Vorrichtung zum Erfassen eines Objektes oder einer Person, insbesondere im Innenraum eines Kraftfahrzeuges.

Bekannte Vorrichtungen zur Bilddatenverarbeitung weisen eine Bilderfassungseinheit mit wenigstens einen Bildsensor auf, der ein Bild beispielsweise zeilenweise aufnimmt und die zeilenweise gewonnenen Bilddaten sofort über einen Bilddatenbus an eine Bildsteuereinheit übermittelt. Einen solchen Bildsensor nennt man auch "Rolling Shutter."-Bildsensor. Die Bildsteuereinheit besteht meist aus einem ASIC oder einem FPGA, der die Bildsensordaten in Echtzeit aufbereitet und in einen Zwischenspeicher (z.B. DRAM) über einen 32 Bit Bus zwischenspeichert. Ein Mikrokontroller steuert den ASIC und die Datenübertragung in dem Bilddaten-Verarbeitungssystem. Der Mikrokontroller wertet weiterhin die im Zwischenspeicher enthaltenen Bilddaten aus. Der Mikrokontroller als Teil einer elektronischen Steuereinheit (ECU) beispielsweise für ein Insassenschutzsystem führt schließlich Algorithmen zur Auswertung der empfangenen Bilddaten durch.

Bei bewegten Bildern steht im Beispielsfall der zeilenweise Bildaufnahme des Bildsensors für die Aufnahme ein nur begrenzter Zeitraum zur Verfügung, da andernfalls das aufgenommene Bild "verwischen" würde. Daher müssen auch die gesamten Bilddaten innerhalb des begrenzten Zeitraums übertragen werden, was zu einem hohen Datenaufkommen führt.

Weiterhin ist ein erheblicher Speicherbedarf für die Bilddaten erforderlich. Zur Lösung dieser Problematik ist beispielsweise aus der WO 02/41031 eine Vorrichtung zur Bilddatenverarbeitung mit vorzugsweise zwei Bildsensoren bekannt, die jeweils über eine sog. Sample & Hold-Vorrichtung verfügen. Ein derartiger Bildsensor kann zur Erfassung eines Bildes für eine vorgebbare Bilderfassungsdauer aktiv geschaltet werden. Nach Erfassung eines Bildes können die aus einzelnen Pixel bestehenden Bilddaten eines erfassten Bildes direkt auf dem Bildsensorchip in einem Speicher, z.B. einem Kondensator, für eine vorgebare Speicherdauer zwischengespeichert werden. Das Bild wird sozusagen im Bildsensor "eingefroren". Ein derartig ausgebildeter Bildsensor ist vorzugsweise auf CMOS-Technologie aufgebaut und wird auch als "Synchronized Shutter"-Bildsensor bezeichnet.

Die eingefrorenen und auf den Bildsensoren gespeicherten Bilddaten werden von einem Steuergerät ausgelesen. Die Ausleserate der Bilddaten aus den Bildsensoren kann dabei an die Verarbeitungsgeschwindigkeit des Mikrocontrollers im Steuergerät angepasst werden.

Die Bereitstellung von Bildern oder Bildsequenzen im oder außerhalb eines Kraftfahrzeuges wird durch eine Reihe von Restriktionen bzw. Bedingungen erschwert. Insbesondere müssen eine oder mehrere Bilderfassungseinheiten unter allen Lichtbedingungen zuverlässig arbeiten. Dazu ist bekannt, neben der Bilderfassungseinheit zusätzlich eine Beleuchtungseinheit vorzusehen, die zwecks Beleuchtung des zu erfassenden Bildbereiches beispielsweise sehr intensive und kurze (IR- = Infrarot-) Lichtpulse mit einer im nahen Infrarotbereich liegenden Wellenlänge (> 800 nm) aussendet, um z.B. Fahrer und Beifahrer nicht abzulenken oder zu stören. Dies geschieht insb. während der aktiv geschalteten Bildsensoren. Der negative Einfluss des zusätzlich vom Umgebungslicht herrührenden Lichtanteils, beispielsweise durch starkes Sonnenlicht, ist dabei reduzierbar, wenn die Bilderfassungsdauer gleich oder in der Größenordnung der Dauer des Lichtpulses ist. Für eine gute Ausleuchtung werden gegenwärtig eine große Anzahl von IR-LEDs benötigt. Gegebenfalls wird auch eine Streuscheibe oder eine speziell berechnete Optik vor die LEDs gesetzt.

Durch möglichst kurze Belichtungszeiten im Bereich von beispielsweise 50µs bis maximal 2 ms ist auch ein Bild mit bewegten Objekten scharf erfassbar. Die maximale zulässige Geschwindigkeit der Objekte im zu erfassenden Bildbereich, bei der ein noch scharfes Bild erfassbar ist, hängt von der maximalen Dauer des Lichtpulses und dem zeitlichen Abstand der Lichtpulse voneinander ab. Dabei beleuchtet vorzugsweise jeder Lichtpuls ein Bild. Die Beleuchtung erfolgt somit nicht ununterbrochen, sondern ist mit den Aufnahmen der Bilderfassungseinheit synchronisiert und erfolgt vorzugsweise nur, wenn das Fremdlicht von außen nicht ausreicht. Die LEDs schicken also nur Lichtpulse, auch als IR-Blitze bezeichnet, aus, wenn es nötig ist und wenn die Bilderfassungseinheit gerade ein Bild aufnimmt. Diese LEDs können so gleichzeitig den IR-Pass realisieren.

Weiterhin muss die interessierende Szene trotz beengtem Bauraum und ggf. ungünstigen räumlichen Anordnungen gut ausgeleuchtet werden und die durch zusätzliche Beleuchtung entstehende Verlustleistung bzw. Wärme darf der Elektronik des Gesamtsystems nicht schaden. Wenn die Beleuchtungseinheit aber im gleichen Gehäuse wie die Bilderfassungseinheit mit ihren Bildsensoren und der Auswerteelektronik untergebracht ist, führt das dazu, dass die elektronischen Komponenten sich gegenseitig erwärmen, und somit nur eine relativ geringe Einsatztemperatur des Systems erreicht werden kann. Bei dem Wärmeproblem wird versucht durch gute und zumeist kostenintensive Kühlmaßnahmen wie LEDs auf Aluminiumboards (FR4 on Alu, Flex on Alu, oder dergleichen) und durch gute Bauelemente mit geringer Verlustleistung und hohem Temperatureinsatzbereich das Problem zu beherrschen.

Schließlich kommt hinzu, dass eine Beleuchtungseinheit, welche die gleiche Ausrichtung wie die Bilderfassungseinheit hat, für ein bildverarbeitendes Verfahren, welches vornehmlich auf der Auswertung von Kantenstrukturen optimiert ist, ungünstig ist, da es kaum Schattenwürfe gibt.

Es wird ferner auf US-A- 5 835 613, WO 00/29262,US-A-5 737 083, DE-A-19757595 und US-A-6 470 801 verwiesen, welche automobile sicherheitssysteme offenbaren.

Aufgabe der Erfindung ist, eine verbesserte Vorrichtung nebst Verfahren zum Erfassen eines Objektes oder einer Person, insbesondere im Innenraum eines Kraftfahrzeuges, anzugeben, welche vorgenannte Nachteile wesentlich vermindert.

Diese Aufgabe wird durch die Merkmale der unabhängigen Patentansprüche gelöst. Vorteilhafte Aus- und Weiterbildungen, welche einzeln oder in Kombination miteinander eingesetzt werden können, sind Gegenstand der abhängigen Ansprüche.

Die Erfindung zum Erfassen eines Objektes oder einer Person, beispielsweise im Innenraum eines Kraftfahrzeuges, mit wenigstens einer Beleuchtungseinheit, die Lichtpulse zwecks Beleuchtung eines zu erfassenden Bildbereiches aussendet; und einer Bilderfassungseinheit, welche wenigstens einen Bildsensor umfasst, welcher die von einem Objekt oder einer Person im Bildbereich reflektierten Lichtpulse aufnimmt und die Bildinformationen des Objektes erfasst; wobei wenigstens eine Beleuchtungseinheit von der Bilderfassungseinheit räumlich getrennt im oder am Kraftfahrzeug angeordnet wird; zeichnet sich dadurch aus, dass von getrennt angeordneter Beleuchtungseinheit und Bilderfassungseinheit die eine Einheit einen Lichtwellensender, welcher Steuerlichtpulse zum Zwecke der Synchronisation bzw. Ansteuerung der Einheiten aussendet, und die andere Einheit einen Lichtwellenempfänger, welcher die Steuerlichtpulse empfängt. Dabei kann in vorteilhafter Weise sowohl ein wärmetechnisch günstiger Ort wie auch ein günstiger Ort zur Beleuchtung der interessierenden Szene gewählt werden.

Vorzugsweise ist zwischen Lichtwellensender und Lichtwellenempfänger die Anordnung eines Lichtwellenleiter zwecks Übertragung der Steuerlichtpulse vorgesehen.

Soweit die mitunter recht aufwendige Verlegung eines festen Kabels zu vermeiden ist, wird hierzu alternativ vorgeschlagen, am Lichtwellensender und am Lichtwellenempfänger Über tragungsmittel für eine kabellose Übertragung der Steuerlichtpulse vorgesehen.

Erfindungsgemäß bevorzugt ist der Lichtwellensender Bestandteil der Bildererfassungseinheit. Dies hat zum Vorteil, dass eine Beleuchtung nicht ununterbrochen sondern mit den Aufnahmen der Bilderfassungseinheit synchronisiert erfolgen kann, insb. in Hinblick darauf, wenn die Bilderfassungseinheit gerade ein Bild aufnimmt.

Um eine hohe Sicherheit gegenüber Fremdlichtpulsquellen und Fehlauslösung einer Beleuchtung zu erreichen ist es vorteilhaft, wenn der Steuerlichtpuls mittels Signal moduliert bzw. mittels eines geeigneten Modulationsverfahren codiert übertragen wird.

Erfindungsgemäß bevorzugt sind Steuerlichtpulse mit einer im nahen Infrarotbereich liegenden Wellenlänge vorgesehen. Dies hat zum Vorteil, dass weder Fahrer noch Beifahrer oder andere Insassen im Kraftfahrzeug oder Verkehrsteilnehmer außerhalb des Kraftfahrzeuges abgelenkt oder gestört werden.

Zwecks Verbesserung des Schattenwurfs ist die Beleuchtungseinheit erfindungsgemäß bevorzugt auf die interessierende Person bzw. das interessierende Objekt ausgerichtet und im Verhältnis zur Bilderfassungseinheit unter einem Winkel α angeordnet, welcher zwecks Vermeidung all zu große Dunkelflächen, beispielsweise im Gesicht eines Insassen, vorzugsweise 0° bis 45° oder bzw. (beim auch möglichen Einsatz mehrerer Beleuchtungseinheiten auch) und 135° bis 180° beträgt, wobei letztgenannter Winkelbereich in vorteilhafter Weise Gegenlichteffekte auszunutzen vermag. Beide Anordnungsvarianten, welche freilich auch kumuliert zum tragen kommen können, haben insbesondere eine verbesserte Ausleuchtung zum Vorteil. Vorzugsweise ist die Stromversorgung der Beleuchtungseinheit(en) von der Bilderfassungseinheit autark, so dass auch die Verlustleistung vollkommen von der Bilderfassungseinheit herausgenommen ist, was in vorteilhafter Weise die Eingangs erwähnte Wärmeproblematik minimiert.

Schließlich wird vorgeschlagen, eine eventuelle Zeitverschiebung von Beleuchtungs- und Bildaufnahmezeitpunkt durch zeitlich früheres Aussenden der Steuerlichtpulse auszugleichen.

Mit der vorliegenden Erfindung können in vorteilhafter Weise geringe Platzverhältnisse, wie sie für Kraftfahrzeugsanwendungen typisch sind, einfacher gelöst werden. Zudem erlaubt die vorliegende Erfindung eine bessere Kantendetektion durch Schattenwürfe der Beleuchtungseinheit an Strukturen und Objekten im Innen- und/oder Außenraum eines Kraftfahrzeuges. Schließlich ist eine einfachere Adaption an verschiedene "Carlines" oder Autotypen ermöglicht. Die vorliegende Erfindung eignet sich daher nicht nur insbesondere für Insassenschutzsysteme moderner Kraftfahrzeuge, sondern für alle kraftfahrzeugbezogene Videosysteme mit aktiver IR-Beleuchtung.

Zusätzliche Einzelheiten und weitere Vorteile der Erfindung werden nachfolgend an Hand bevorzugter Ausführungsbeispiele in Verbindung mit der beigefügten Zeichnung beschrieben.

Darin zeigen schematisch:
- Fig. 1: eine erfindungsgemäße Vorrichtung zum Erfassen eines Objektes oder einer Person im Innenraum eines Kraftfahrzeuges; und
- Fig. 2: die erfindungsgemäße Vorrichtung in Anlehnung an Fig. 1 in einem vergrößerten Detailausschnitt.

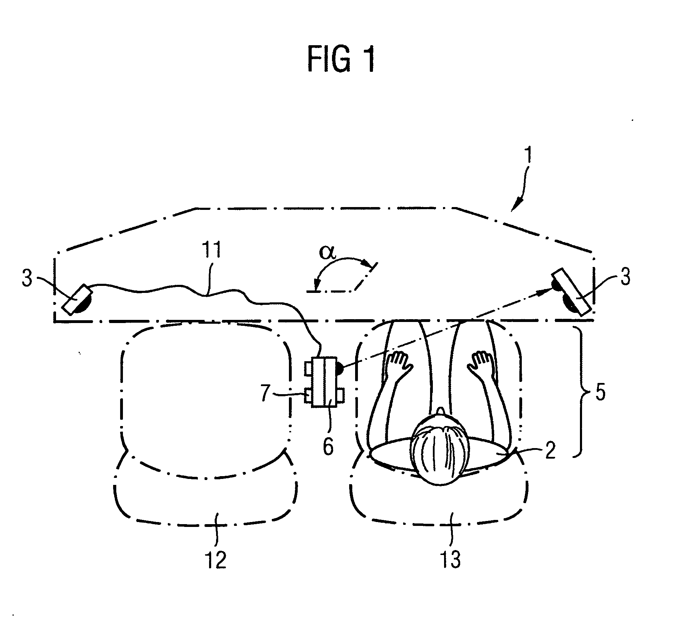

Fig. 1 zeigt eine erfindungsgemäße Vorrichtung zum Erfassen eines Objektes oder einer Person 2, insb. im Innenraum eines Kraftfahrzeuges 1. Zur Vorrichtung zählt wenigstens eine Bil derfassungseinheit 6, welche beispielsweise zwischen Fahrer-12 und Beifahrersitz 13 im Dachhimmel des Kraftfahrzeugs 1 angeordnet ist. Die Bilderfassungseinheit 6 steht mit einer Beleuchtungseinheit 3 in Wirkverbindung, welche erfindungsgemäß räumlich getrennt von der Bilderfassungseinheit 6 im Kraftfahrzeug 1 angeordnet ist, beispielsweise im Dachhimmel benachbart der A-Säule oder in dieser oder an anderer geeigneter Stelle wie am Innenrückspiegel, benachbart der Windschutzscheibe oder dergleichen (nicht dargestellt). Zwecks Verbesserung des Schattenwurfs ist die Beleuchtungseinheit 3 auf die Person bzw. das Objekt 2 ausgerichtet und im Verhältnis zur Bilderfassungseinheit 6 unter einem Winkel α angeordnet, welcher unter Nutzung von Gegenlichteffekten vorzugsweise 135° bis 180° betragen kann und in Fig. 1 beispielhaft mit 140° gewählt wurde. Soweit zweckdienlich können auch weitere Beleuchtungseinheiten (nicht dargestellt) vorgesehen werden. Die Stromversorgung der Beleuchtungseinheit(en) 3 von der Bilderfassungseinheit 6 erfolgt bevorzugt autark.

Zum Zwecke der Synchronisation bzw. Ansteuerung der Einheiten 3 und 6 ist zwischen Bilderfassungseinheit 6 und Beleuchtungseinheit 3 beispielsweise ein Lichtwellenleiter 11 angeordnet (in der linken Hälfte von Fig. 1 dargestellt). Alternativ hierzu und besonders bevorzugt erfolgt eine Synchronisation zwischen den Einheiten 3 und 6 kabellos (in der rechten Hälfte von Fig. 1 dargestellt) mit Hilfe geeigneter Mittel 8 und 9 zum übertragen von Steuerlichtimpulsen 10.

Die Bilderfassungseinheit 6 umfasst wenigstens einen Bildsensor 7 (in der rechten Hälfte von Fig. 1 dargestellt). Bevorzugt sind jedoch Bilderfassungseinheiten 6 mit zwei Bildsensoren 7 vorgesehen (in der linken Hälfte von Fig. 1 dargestellt). Derartige Bilderfassungseinheiten 6 werden auch als Stereokameras bezeichnet. Indem die optischen Achsen der Bildsensoren 7 einer Stereokamera 6 einen vorgebbaren Abstand aufweisen, kann in vorteilhafter Weise ein Stereobild bzw. ein 3D-Bild von z.B. beweglichen Objekten 2 aufgenommen wer den und zur weiteren Datenverarbeitung an einem Mikrocontroller (nicht dargestellt) zur Auswertung übermittelt werden. Mit Hilfe von Algorithmen können anschließend die Abstände der Objekte bzw. Personen 2 zu den Bildsensoren 7 ermittelt werden.

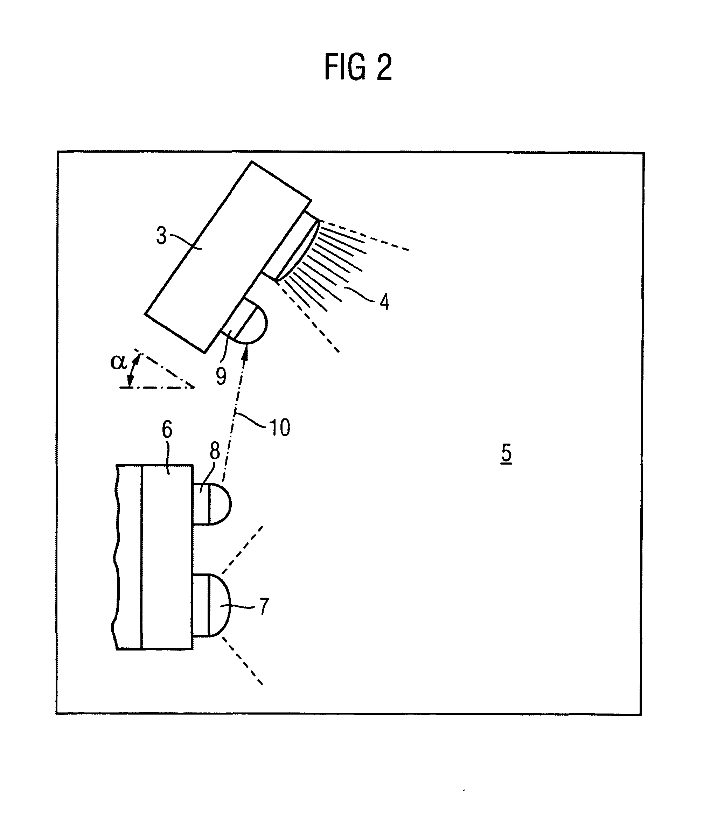

Fig. 2 zeigt die erfindungsgemäße Vorrichtung in Anlehnung an Fig. 1 in einem vergrößerten Detailausschnitt. Zwecks Verbesserung des Schattenwurfs ist die Beleuchtungseinheit 3 auf die Person bzw. das Objekt 2 ausgerichtet und im Verhältnis zur Bilderfassungseinheit 6 wiederum unter einem Winkel α angeordnet, welcher Alternativ oder kumulativ zu Fig. 1 bevorzugt 0° bis 45° betragen kann und in Fig. 2 beispielhaft mit 40° gewählt wurde. Vorzugsweise vermag allein die Beleuchtungseinheit 3 Lichtpulse 4 zwecks Beleuchtung eines zu erfassenden Bildbereichs 5 auszusenden. Es sei jedoch angemerkt, dass Kombinationen der erfindungsgemäßen Anordnung von Bilderfassungs- 6 und Beleuchtungseinheiten 3 auch mit bekannten Bilderfassungsvorrichtungen nicht ausgeschlossen sind, insb. je nach Fahrzeugtyp oder spezieller Anwendung weitere Beleuchtungseinheiten im bzw. am Kraftfahrzeug 1 und/oder in oder benachbart der Bilderfassungseinheit 6 zweckdienlich sein können (nicht dargestellt). Zudem sei hervorgehoben, dass die vorliegende Erfindung auch für fahrzeugbezogene sog. Außenraum-Applikationen zweckdienlich Anwendung finden kann.

In Fig. 2 deutlich zu sehen ist zudem, wie erfindungsgemäß die Bilderfassungseinheit 6 einen Lichtwellensender 8 aufweist, welcher Steuerlichtpulse 10 zum Zwecke der Synchronisation bzw. Ansteuerung der Einheiten 3 und 6 aussendet. Korrespondierend dazu weist die Beleuchtungseinheit 3 einen Lichtwellenempfänger 9 auf, welcher die Steuerlichtpulse 10 empfängt. Die kabellose Übertragung der Steuerlichtpulse 10 erfolgt über einen Lichtwellensender 8 bzw. Lichtwellenempfänger 9, wobei vorzugsweise Steuerlichtpulse 10 mit einer im nahen Infrarotbereich (IR) liegenden Wellenlänge (> 800 nm) vorgesehen sind, welche zur Vermeidung von Fehlauslösungen oder zum Schutz gegen Fremdinfrarotquellen wie die der Beleuchtungseinheit 3, von Ent- bzw. Verriegelungssystemen oder dergleichen, vorzugsweise moduliert und/oder codiert übertragen werden. Sollte zwischen Bildaufnahme und Beleuchtung ein eventuelle Laufzeitverschiebung auszugleichen sein, kann dieses beispielsweise durch zeitlich früheres Aussenden der Steuerlichtpulse erfolgen.

Mit der vorliegenden Erfindung können in vorteilhafter Weise geringe Platzverhältnisse im oder am Kraftfahrzeug 1 einfacher gelöst werden. Zudem erlaubt die vorliegende Erfindung eine bessere Kantendetektion durch Schattenwürfe der Beleuchtungseinheit 3 an Strukturen und Objekten 2 im Innen-und/oder Außenraum eines Kraftfahrzeuges 1. Schließlich ist eine einfachere Adaption an verschiedene "Carlines" oder Autotypen ermöglicht. Die vorliegende Erfindung eignet sich daher nicht nur insbesondere für Insassenschutzsysteme moderner Kraftfahrzeuge 1, sondern für alle kraftfahrzeugbezogene Videosysteme mit aktiver IR-Beleuchtung.

## Patentansprüche

1. Vorrichtung zum Erfassen eines Objektes oder einer Person (2), insb. im Innenraum eines Kraftfahrzeuges (1), mit
- wenigstens einer Beleuchtungseinheit (3), die Lichtpulse (4) zwecks Beleuchtung eines zu erfassenden Bildbereiches (5) aussendet; und mit
- einer Bilderfassungseinheit (6), welche wenigstens einen Bildsensor (7) umfasst, welcher die von einem Objekt oder einer Person (2) im Bildbereich (5) reflektierten Lichtpulse aufnimmt und die Bildinformationen des Objektes bzw. der Person (2) erfasst;
wobei
- wenigstens eine Beleuchtungseinheit (3) von der Bilderfassungseinheit (6) räumlich getrennt im oder am Kraftfahrzeug (1) angeordnet ist,
**dadurch gekennzeichnet, dass**
von getrennt angeordneter Beleuchtungseinheit (3) und Bilderfassungseinheit (6)
- die eine Einheit (6 bzw. 3) einen Lichtwellensender (8) umfasst, welcher Steuerlichtpulse (10) zum Zwecke der Synchronisation bzw. Ansteuerung der Einheiten (3; 6) aussendet, und
- die andere Einheit (3 bzw. 6) einen Lichtwellenempfänger (9) umfasst, welcher die Steuerlichtpulse (10) empfängt.

2. Vorrichtung nach Anspruch 1, **dadurch gekennzeichnet, dass** zwischen Lichtwellensender (8) und Lichtwellenempfänger (9) ein Lichtwellenleiter (11) für die Übertragung der Steuerlichtpulse vorgesehen ist.

3. Vorrichtung nach Anspruch 1 oder 2, **dadurch gekennzeichnet, dass** am Lichtwellensender (8) und Lichtwellenempfänger (9) Übertragungsmittel für eine kabellose Übertragung der Steuerlichtpulse (10) vorgesehen sind.

4. Vorrichtung nach einem der vorherigen Ansprüche, **dadurch gekennzeichnet, dass** der Lichtwellensender (8) Bestandteil der Bilderfassungseinheit (6) ist.

5. Vorrichtung nach einem der vorherigen Ansprüche, **dadurch gekennzeichnet, dass** die Steuerlichtpulse (10) moduliert und/oder codiert übertragbar sind.

6. Vorrichtung nach einem der vorherigen Ansprüche, **dadurch gekennzeichnet, dass** Steuerlichtpulse (10) mit einer im nahen Infrarotbereich (IR) liegenden Wellenlänge vorgesehen sind.

7. Vorrichtung nach einem der vorherigen Ansprüche, **dadurch gekennzeichnet, dass** die Beleuchtungseinheit (3) auf die Person bzw. das Objekt (2) ausgerichtet und im Verhältnis zur Bilderfassungseinheit (6) unter einem Winkel α angeordnet ist, welcher vorzugsweise 0° bis 45° und/oder 135° bis 180° beträgt.

8. Vorrichtung nach einem der vorherigen Ansprüche, **dadurch gekennzeichnet, dass** die Stromversorgung der Beleuchtungseinheit (3) von derjenigen für die Bilderfassungseinheit (6) autark ist.

9. Verfahren zum Erfassen eines Objektes oder einer Person (2), insb. im Innenraum eines Kraftfahrzeuges (1), unter Verwendung
- wenigstens einer Beleuchtungseinheit (3), die Lichtpulse (4) zwecks Beleuchtung eines zu erfassenden Bildbereiches (5) aussendet; und unter Verwendung
- einer Bilderfassungseinheit (6), welche wenigstens einen Bildsensor (7) umfasst, welcher die von einem Objekt oder einer Person (2) im Bildbereich (5) reflektierten Lichtpulse aufnimmt und die Bildinformationen des Objektes bzw. der Person (2) erfasst;
wobei
- wenigstens eine Beleuchtungseinheit (3) und Bilderfassungseinheit (6) räumlich getrennt voneinander im oder am Kraftfahrzeug (1) angeordnet sind;
**dadurch gekennzeichnet, dass**
von getrennt angeordneter Beleuchtungseinheit (3) und Bilderfassungseinheit (6)
- die eine Einheit (6 bzw. 3) Steuerlichtpulse (10) zum Zwecke der Synchronisation bzw. Ansteuerung der Einheiten (3; 6) über einen Lichtwellensender (8) aussendet, und
- die andere Einheit (3 bzw. 6) die Steuerlichtpulse (10) über einen Lichtwellenempfänger (9) empfängt.

10. Verfahren nach Anspruch 9, bei dem die Steuerlichtpulse über einen zwischen Lichtwellensender (8) und Lichtwellenempfänger (9) angeordneten Lichtwellenleiter (11) übertragen werden.

11. Verfahren nach Anspruch 9 oder 10, bei dem die Steuerlichtpulse (10) kabellos übertragen werden.

12. Verfahren nach einem der Ansprüche 9 bis 11, bei dem die Steuerlichtpulse (10) moduliert und/oder codiert übertragen werden.

13. Verfahren nach einem der Ansprüche 9 bis 12, bei dem die Wellenlänge der Steuerlichtpulse (10) im nahen Infrarotbereich (IR) liegt.

14. Verfahren nach einem der Ansprüche 9 bis 13, bei dem eine eventuelle Zeitverschiebung durch zeitlich früheres Aussenden der Steuerlichtpulse (10) ausgeglichen wird.

## Claims

1. Equipment for detecting an object or person (2), in particular in the interior of a motor vehicle (1), with
- at least one illumination unit (3) which emits light pulses (4) for the purpose of illuminating an image field (5) which is to be captured; and with
- an image capture unit (6) which incorporates at least one image sensor (7), which takes in the reflected light pulses from an object or a person (2) in the image field (5), and captures the image data for the object or person (2);
whereby
- at least one illumination unit (3) is arranged in or on the motor vehicle (1) in a spatially separate position from the image capture unit (6);
**characterized in that**
of the separately arranged illumination unit (3) and image capture unit (6)
- the one unit (6 or 3, as appropriate) incorporates an optical transmitter (8), which emits control light pulses (10) for the purpose of synchronizing or controlling, as applicable, the units (3; 6), and
- the other unit (3 or 6, as appropriate) incorporates an optical receiver (9), which receives the control light pulses (10).

2. Equipment in accordance with claim 1, **characterized in that**
between the optical transmitter (8) and the optical receiver (9) there is a fibre optic cable (11) for the transmission of the control light pulses.

3. Equipment in accordance with claim 1 or 2, **characterized in that** transmission facilities are provided at the optical transmitter (8) and the optical receiver (9), for the cordless transmission of control light pulses (10).

4. Device in accordance with one of the preceding claims, **characterized in that** the optical transmitter (8) is a component of the image capture unit (6).

5. Device in accordance with one of the preceding claims, **characterized in that** the control light pulses (10) are transmitted in modulated and/or encoded form.

6. Device in accordance with one of the preceding claims, **characterized in that** control light pulses (10) are used which have a wavelength lying in the near infra-red range (IR) .

7. Device in accordance with one of the preceding claims, **characterized in that** the illumination unit (3) is aligned towards the person or the object (2) and, relative to the image capture unit (6), is arranged at an angle of α which is preferably from 0° to 45° and/or from 135° to 180°.

8. Device in accordance with one of the preceding claims, **characterized in that** the power supply for the illumination unit (3) is independent of that for the image capture unit (6).

9. Method for capturing an object or a person (2), in particular in the interior of a motor vehicle (1), making use of
- at least one illumination unit (3) which emits light pulses (4) for the purpose of illuminating an image field (5) which is to be captured; and making use of
- an image capture unit (6) which incorporates at least one image sensor (7), which takes in reflected light pulses from an object or a person (2) in the image field (5) and captures the image data for the object or person (2);
whereby
- at least one illumination unit (3) and image capture unit (6) are arranged to be spatially separated from each other in or on the motor vehicle (1),
**characterized in that**
of the separately arranged illumination unit (3) and image capture unit (6)
- the one unit (6 or 3, as appropriate) emits control light pulses (10) from an optical transmitter (8), for the purpose of synchronizing or controlling, as applicable, the units (3; 6), and
- the other unit (3 or 6, as appropriate) receives the control light pulses (10) through an optical receiver (9).

10. Method in accordance with claim 9, by which the control light pulses are transmitted over a fibre optic cable (11) arranged between the optical transmitter (8) and the optical receiver (9).

11. Method in accordance with claim 9 or 10, by which the control light pulses (10) are transmitted cordlessly.

12. Method in accordance with one of claims 9 to 11, by which the control light pulses (10) are transmitted in modulated or encoded form.

13. Method in accordance with one of claims 9 to 12, by which the wavelength of the control light pulses (10) lies in the near infra-red range (IR).

14. Method in accordance with one of claims 9 to 13, by which any time offset is compensated by the transmission of the control light pulses (10) at an earlier point in time.

## Revendications

1. Dispositif permettant de saisir un objet ou une personne (2), notamment dans l'habitable d'un véhicule automobile (1),
comportant
- au moins une unité d'éclairage (3) qui émet des impulsions lumineuses (4) en vue d'éclairer une zone d'image à saisir (5); et comportant
- une unité de saisie d'images (6) comprenant au moins un capteur visuel (7) qui reçoit les impulsions lumineuses reflétées par un objet ou une personne (2) se trouvant dans la zone d'image (5) et qui saisit des informations-image dudit objet ou de ladite personne (2);
- au moins une unité d'éclairage (3) étant disposée dans ou sur le véhicule automobile (1) de manière à être séparée spatialement de l'unité de saisie d'images (6),
**caractérisé en ce que**,
de l'unité d'éclairage (3) et de l'unité de saisie d'images (6) disposées de manière à être séparées l'une de l'autre,
- l'une des unités (6 ou 3) comprend un émetteur d'ondes lumineuses (8) qui émet des impulsions lumineuses de commande (10) en vue de la synchronisation ou activation des unités (3;6), et
- l'autre unité (3 ou 6) comprend un récepteur d'ondes lumineuses (9) qui reçoit les impulsions lumineuses de commande (10).

2. Dispositif selon la revendication 1, **caractérisé en ce que**
entre l'émetteur d'ondes lumineuses (8) et le récepteur d'ondes lumineuses (9) est prévu un guide d'ondes lumineuses (11) chargé de la transmission des impulsions lumineuses de commande.

3. Dispositif selon la revendication 1 ou 2, **caractérisé en ce que** des moyens de transmission sont prévus sur l'émetteur d'ondes lumineuses (8) et sur le récepteur d'ondes lumineuses (9) en vue d'une transmission sans câble des impulsions lumineuses de commande (10).

4. Dispositif selon l'une des revendications précédentes, **caractérisé en ce que** l'émetteur d'ondes lumineuses (8) fait partie de l'unité de saisie d'images (6).

5. Dispositif selon l'une des revendications précédentes, **caractérisé en ce que** les impulsions lumineuses de commande (10) peuvent être transmises de manière modulée et/ou de manière codée.

6. Dispositif selon l'une des revendications précédentes, **caractérisé en ce qu'**il est prévu des impulsions lumineuses de commande (10) présentant une longueur d'onde située dans la gamme infrarouge (IR) proche.

7. Dispositif selon l'une des revendications précédentes, **caractérisé en ce que** l'unité d'éclairage (3) est dirigée sur la personne ou l'objet (2) et est disposée par rapport à l'unité de saisie d'images (6) selon un angle α compris, de préférence, entre 0° et 45° et/ou entre 135° et 180°.

8. Dispositif selon l'une des revendications précédentes, **caractérisé en ce que** l'alimentation en courant de l'unité d'éclairage (3) est entièrement indépendante de celle de l'unité de saisie d'images (6).

9. Procédé permettant de saisir un objet ou une personne (2), notamment dans l'habitable d'un véhicule automobile (1), utilisant
- au moins une unité d'éclairage (3) qui émet des impulsions lumineuses (4) en vue d'éclairer une zone d'image à saisir (5); et utilisant
- une unité de saisie d'images (6) comprenant au moins un capteur visuel (7) qui reçoit les impulsions lumineuse reflétées par un objet ou une personne (2) se trouvant dans la zone d'image (5) et qui saisit des informations-image dudit objet ou de ladite personne (2);
- au moins une unité d'éclairage (3) et une unité de saisie d'images (6) étant disposées dans ou sur le véhicule automobile (1) de manière à être séparées spatialement l'une de l'autre,
**caractérisé en ce que**
de l'unité d'éclairage (3) et de l'unité de saisie d'images (6) disposées de manière à être séparées l'une de l'autre,
- l'une des unités (6 ou 3) émet, par l'intermédiaire d'un émetteur d'ondes lumineuses (8), des impulsions lumineuses de commande (10) en vue de la synchronisation ou activation des unités (3;6), et
- l'autre unité (3 ou 6) reçoit, par l'intermédiaire d'un récepteur d'ondes lumineuses (9), lesdites impulsions lumineuses de commande (10).

10. Procédé selon la revendication 9, dans lequel les impulsions lumineuses de commande (10) sont transmises par l'intermédiaire d'un guide d'ondes lumineuses (11) disposé entre l'émetteur d'ondes lumineuses (8) et le récepteur d'ondes lumineuses (9).

11. Procédé selon la revendication 9 ou 10, dans lequel les impulsions lumineuses de commande (10) sont transmises sans câble.

12. Procédé selon l'une des revendications 9 à 11, dans lequel les impulsions lumineuses de commande (10) sont transmises de manière modulée et/ou de manière codée.

13. Procédé selon l'une des revendications 9 à 12, dans lequel la longueur d'onde des impulsions lumineuses de commande (10) se situe dans la gamme infrarouge (IR) proche.

14. Procédé selon l'une des revendications 9 à 13, dans lequel un éventuel temps de décalage est compensé par une émission anticipée des impulsions lumineuses de commande (10).
